# EUROPEAN PATENT APPLICATION

(11) **EP 2 645 293 A2**
(43) Date of publication of application: **02.10.2013**
(21) Application number: 13161248.3
(22) Date of filing: 27.03.2013
(51) Int. Cl.: G06F 21/53

(54) **Method and apparatus for controlling operations performed by a mobile computing device**

(30) Priority: 28.03.2012 US 201261616870 P
(71) Applicant: Bauch, Eitan, 30889 Ceasarea (IL); Yehuda, Avner, 5234169 Ramat-Gan (IL); Ahr, Oren, 37861 Katzir (IL)
(72) Inventor: Bauch, Eitan, 30889 Ceasarea (IL); Yehuda, Avner, 5234169 Ramat-Gan (IL); Ahr, Oren, 37861 Katzir (IL)
(74) Representative: Modiano, Micaela Nadia

(57) **Abstract**

The huge success of mobile computing devices has fundamentally changed the corporate computing environment, with employees using corporate data on their own computing devices. Companies would still like to control their data , event when present on an employee's personal computing device, such as la Smartphone.

The present invention presents a system and a method, which will enable companies to achieve such a control while still allowing the user to use the applications he desires on his device. The protected data will be replaced by other data.

## Description

### FIELD OF THE INVENTION

The invention relates to mobile computing devices. More specifically, the invention relates to controlling operations performed by mobile computing devices.

### BACKGROUND OF THE INVENTION

The use of mobile devices, such as cellular telephones, has become globally prevalent. Moreover, more and more of these mobile devices are now used for storing and accessing data, instead of serving as simple telephone devices. Many such mobile devices are commonly referred to as "smartphones". However, there are mobile devices that are not smartphones or even not cellular telephones. For example, there are tablet devices, laptop computers etc.

Mobile computing devices confront their users with many security challenges, to which attention has been drawn in the art. For example, one approach promotes logging communications, as suggested by US patent application 2007/111,704 ("SYSTEM AND METHOD FOR COMMUNICATION RECORD LOGGING"), published on May 2007, and disclosing a method for maintaining a log of communications initiated or received at a portable electronic device of a first party. The communications include at least one of short message service (SMS) messages, personal identification number (PIN) messages and cellular telephone calls. The method includes receiving a data record for each of the communications, extracting information from the data record, and storing the information in a log file.

Other approaches deal, for example, with authentication. For example, US patent application 2008/222,692 ("DEVICE-INITIATED SECURITY POLICY"), published on September 2008, teaches a method and system for executing a security policy at a mobile terminal. The mobile terminal may contact an authentication entity based on the security policy. The mobile terminal may receive a response from the authentication entity indicative of a security status of the mobile terminal. The mobile terminal may execute a security action based on the received response.

WO2009/021200 ("MANAGING AND ENFORCING POLICIES ON MOBILE DEVICES"), Roman *et al*., published on February 2009, describes a system configured to manage policies, including decision policies and active policies, on mobile devices. The system includes a device policy repository, a policy decision point, a decision policy enforcer, and an active policy enforcer. Also disclosed is a method for enforcing policies on mobile devices that proactively monitors the execution environment and automatically triggers active policies. The method further exports an interface and provides functionality to evaluate and enforce decision policies. The mobile devices can combine policies from different sources, including detecting and avoiding policy conflicts.

Nowadays, modern computing systems have a kernel, wherein amongst the kernel's responsibilities included is management of the system's resources, including memory. Memory is normally virtually partitioned to kernel space and to user space, while applications, running in user space, are not permitted to address kernel memory. Device drivers allow applications to access peripherals connected to the computer. Efforts have been dedicated in the art for simplifying communication and interoperability between applications and kernel-level processes, such as the kernel itself, device drivers etc. For example, US 7,844,442 ("SYSTEM AND METHOD FOR PROVIDING A REMOTE USER INTERFACE FOR AN APPLICATION EXECUTING ON A COMPUTING DEVICE"), TzruyaYoav M., published on 2007, discloses a system that includes a computing device configured to execute a software application and at least one remote user interface (UI) communicatively coupled to the computing device via a data communication network. The remote UI includes at least one hardware device such as a video, audio or user input/output (I/O) device. The computing device is further configured to emulate the hardware device locally and to redirect function calls generated by the software application for the emulated local hardware device to the remote UI for processing by the hardware device.

Furthermore, attention has been given in the art to providing applications and systems with additional capabilities without changing or recompiling the applications. For example, US 8060460 ("SYSTEM, METHOD AND COMPUTER PROGRAM PRODUCT FOR DYNAMICALLY MEASURING PROPERTIES OF OBJECTS RENDERED AND/OR REFERENCED BY AN APPLICATION EXECUTING ON A COMPUTING DEVICE"), TzruyaYoav M. et el., published on 2010, teaches a system, method and computer program product for dynamically measuring attributes of objects rendered and/or referenced by an executing software application without having to change and recompile the original application code. The system includes a staging environment that monitors the execution of the application and indexes items of graphical and/or audio information generated by the application into a first database. A second database is populated with one or more business rules, wherein each business rule is associated with one or more of the indexed objects. The system further includes a run-time environment that identifies items of graphics and/or audio information as they are generated by the application during run-time, uses the second database to determine if an identified item is associated with a business rule, and, responsive to a determination that an identified item is associated with a business rule, measures the object and its related attributes.

### SUMMARY OF THE INVENTION

There is a need in the art for a method and system allowing an organization to simply control operations performed by mobile computing devices having access to information belonging to the organization, without the need to change or recompile applications operating on the devices.

It is therefore an object of the invention to provide a method and system for allowing the organization such control, without changing or recompiling applications operating on the mobile computing devices.

The present invention provides a method for controlling operations performed by a mobile communications device, the method comprising:
obtainingruleinformation items indicative of a native operation whose performance should be controlled per data items and preparation of an imposable operation that should be enforced, the imposable function performs the operation desired by the company on the data items.
The native operation comprises:
   accessingdata records;
      monitoring native operations to be performed on said communications device; and
      upon detecting that the native operation indicated by said ruleinformation items is about to be performed, enforcing the imposable operation indicated by the ruleinformation and providing to the application data, which is different than the original data.
      In some embodiments of the present invention the original data will be stored and then manipulated and delivered to the application.
      In some embodiments it will be manipulated and returned to the application, And in some embodiments a different data, which is a function of the originaldatawill be delivered.
      In some embodiments of the present invention obtaining rule information items includes parsing information carried by said rule information items.

The present invention further provides an apparatus for controlling operations performed by a mobile computing device, the apparatus comprising:
a policy module for obtaining rule information items indicative of a native operation whose performance should be controlled and preparation of an imposable operation that should be enforced;
a data access module configured to access data records;
an enforcement module for enforcing the imposable operation indicated by the rule information; and
a data-manipulating module for manipulating data in accordance with said imposable operation so as to obtain manipulated data having structure resembling said data records.

### BRIEF DESCRIPTION OF THE DRAWINGS

In order to understand the invention and to see how it may be carried out in practice, embodiments will now be described, by way of non-limiting example only, with reference to the accompanying drawings, in which:
Figure 1 is a basic overview illustrating mobile computing devices in a network, according to certain embodiments of the invention;
Figure 2 schematically illustrates an authentication server communicating with mobile computing devices, in accordance with embodiments of the invention;
Figure 3 schematically illustrates a system for enforcing policies in a mobile computing device, in accordance with embodiments of the invention;
Figure 4 is a flowchart of one method of replacing a native operation with an imposable function;
Figure 5 is a flowchart of a second method of replacing a native operation with an imposable function;
Figure 6schematically illustrates a system for enforcing rules in a mobile computing device, in accordance with alternative embodiments of the invention; and
Figure 7 is a block diagram depicting a proxy in accordance with certain embodiments of the invention.

### DETAILED DESCRIPTION

In the following description components that are common to more than one figure will be referenced by the same reference numerals.

In addition, unless specifically noted, embodiments described or referenced in the present description can be additional and/or alternative to any other embodiment described or referenced therein.

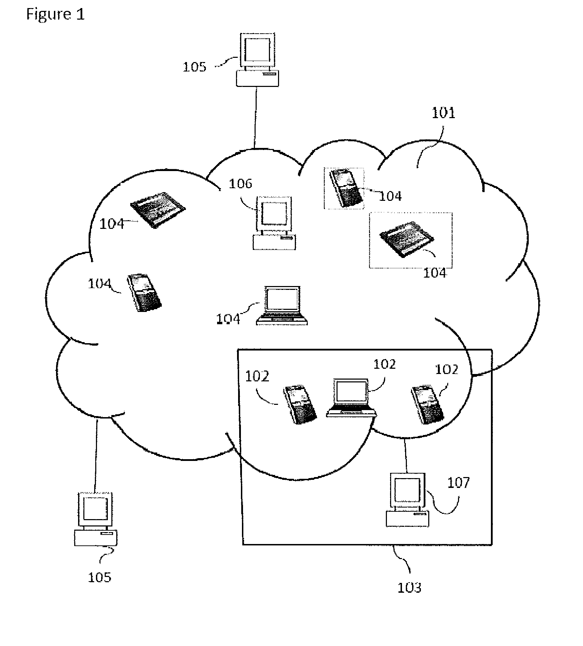

Figure 1 is a basic overview illustrating mobile computing devices in a network, according to certain embodiments of the invention. In the figure, the cloud 101 represents a communications network, such as a cellular network, the Internet etc. A plurality of mobile computing devices (such as cellular telephones, tablet devices, laptop devices and any other wirelessly connected computer devices) are coupled to the network. These devices are depicted as being inside the cloud. Hereinafter, unlike specifically noted, the terms "mobile computing devices", "mobile devices" and "computing devices" may be interchangeably used. Out of these computing devices those denoted 102 are associated with a certain organization 103 (such as a corporate), while others, denoted 104, are not associated with the organization.

Appreciating that many modern mobile devices can access data, e.g., in addition to their traditional usage as telephone devices, the figure also includes schematic representation of such data storing computers 105, accessible to mobile devices. In the figure the data storing computers 105 are coupled tithecommunications network 101, although positioned outside of the network, hence they may provide data to devices operating in the cloud as well as to other computerized devices not being part of the communications network 101, that is, to devices being part of other networks, not necessarily intersecting with communications network 101. However, this is non-limiting and other data storing computers, such as the one denoted 106, may be part of the cloud, that it, they may be accessible to mobile devices or to other devices, including devices using a gateway. In addition, there is another data storing computer 107 illustrated that belongs to organization103.

Unlike regular telecommunications, access to the data storing computers is done via cellular communication protocols, such as WAP (Wireless Application Protocol), or via any other protocol including telnet, FTP (File Transfer Protocol), Internet Protocols (including TCP/IP and UDP/IP), Hyper Text Transfer Protocol (HTTP), etc. According to certain embodiments of the present invention, access protocols do not include telephone calls and short messages known as SMSs (Short Messages Service).

When a mobile computing device (102 or 104) accesses a data-storing computer (105, 106 and/or 107), it may read data therefrom and/or write data thereto. Reading data includes any transfer of data and/or information from the computer to the device, white writing data includes any transfer of data and/or information from the device to the computer. This includes, for example, uploading and downloading information and applications, remote procedure calls etc. Those versed in the art would appreciate that access involves, then, security risks, such as downloading viruses and Trojan horses, performing threatening operations and others.

In addition, it is appreciated that a data-storing computer belonging to an organization may store secure data that the organization may not wish to expose to the public. Instead of storing secured data directly in the data-storing computer 107, data may be stored in other computers in the organization, while data storing computer 107 may have access thereto. Hence, data storing computer 107 may relay access to where the data is stored.

Moreover, in addition to securing data stored in data storing computers in the organization, it should be appreciated that information is available at the mobile devices 102 as well. For example, a mobile device 102 may have an address book, a calendar and additional utilities having access to locally stored data including (but non-limited to) data created on the device, such as log files, photos, user created text files etc. Such locally stored data may be of interest to the organization and therefore it is possible that the organization would like to secure it. Therefore, an organization may be interested in having a certain degree of control over mobile computing devices associated therewith, e.g., for controlling data transmission therefrom and thereto.

However, such control is not necessarily done for direct security enforcement. It may be done due to other reasons as well. For example, a mobile device having a GPS (Global Positioning System), with navigation software installed, communicates with a navigation data-storing computer dedicated thereto. Then, the mobile device may use the information obtained from the navigation data-storing computer, e.g., for further transmitting it to other data storing computers or to other devices. It is possible to think of organization's interests, in accordance therewith such a transmission is undesirable. According to another example, the organization would like to enforce users of their associated mobile devices to install certain email (electronic mail) reading software, and not others. Yet another example is upon browsing to internet pages requiring authentication the organization may wish to authenticate using a predetermined organization's user name and password instead of allowing the device user to authenticate, etc.

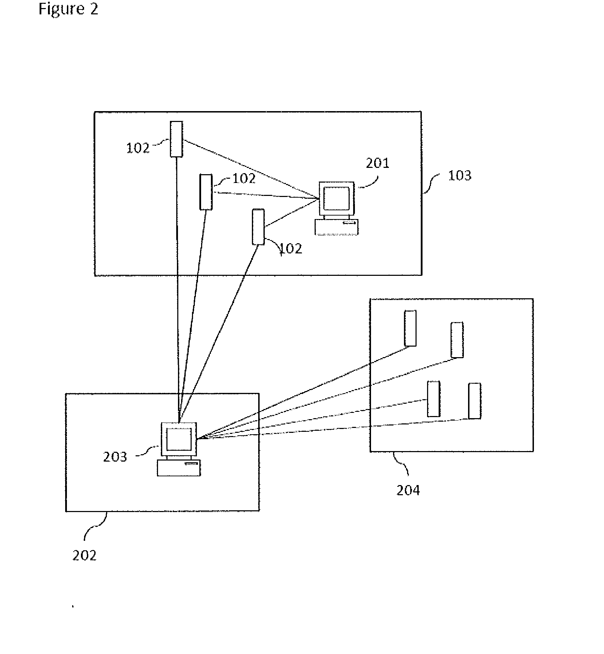

Hence, in accordance with embodiments of the present invention an organization may find it expedient to enforce a policy on using mobile devices associated therewith, wherein a policy comprises rules. Accordingly, Figure 2schematically illustrates a policies server 201 communicating with mobile computing devices102, in accordance with embodiments of the invention. In the figure, policies server 201 belongs to organization 103, being part of the organization's network. However, this is non-mandatory and in alternative embodiments the policies server 201 can be positioned outside the organization. For example, the organization may buy policy distribution services from another organization 202 having one or more policies server 203 used to distribute policies to mobile devices associated with more than one organization, such as 103, 204 and possibly others. Moreover, a mobile device may obtain policies from more than one policies server.

While in the figure connection of the policies servers (201, 203) with the mobile devices appear as if they are physically connected, it should be appreciated that according to the invention the connections are non-physical, such as in wireless or cellular connections.

It is noted that policies may be distributed to the mobile devices using any available protocol. In addition, the policies may comprise one or more operational rules, that, for example, can be constructed of XML (Extensible Markup Language) code, with or without encryption. For example, it should be appreciated that part of the rules in a policy may be aimed at all the mobile devices associated with the organization, some are aimed at part thereof, while it is even possible to aim a rule at a specific device. Moreover, aiming rules at devices may be dynamic, that is, a policy be aimed at devices as long as they fulfill a certain condition. Furthermore, some rules may be permanent, that is, time independent, while others may have an expiration time. These examples arc non-limiting though and any other characterization of the rules can be used, if and when applicable.

In addition, it is noted that an Information Technology (IT) manager in the organization, that is, any person authorized to access and affect changes to the organization's policies, may add, remove or modify the rules constituting the policy whenever required.

Presently in the art there are known methods for enforcing policies on mobile devices, such as the method disclosed by WO2009/021200. However, the policies in accordance with the invention are not the same as those known in the art. Unlike prior art, which can activate and deactivate operations on the mobile device and many time report violations of the rules, in accordance with the invention operations are modified upon performance, and yet, the operations are performed. They are not deactivated.

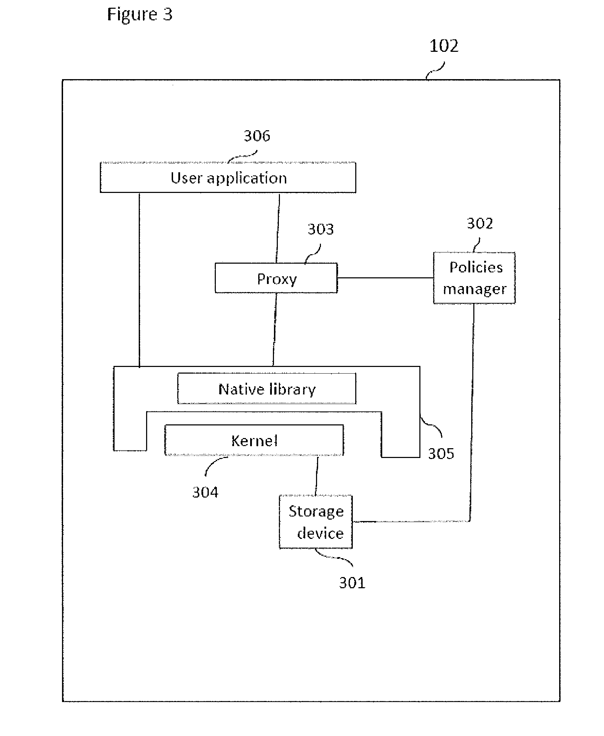

Figure 3schematically illustrates a system for enforcing policies in a mobile computing device102, in accordance with embodiments of the invention. The mobile device has a storage device 301, used for long-term storage. The storage device can be used, amongst other tasks, for storing policies obtained at the mobile device. A policies manager302, coupled to the storage device and having access thereto can store in the storage device new policies obtained from a policies server (such as policies server 201 or 203 illustrated in Figure 2). The policies manager can also read policies from the storage device, and convey them, or more accurately, information items indicative of rules thereof, to a proxy 303.

A mobile device has a kernel 304 managing the device's resources and allowing applications to operate and use these resources. Normally, the operating system provides a library, constituting a "native library" 305, also known as "system calls", handling low level details while passing information to the kernel. In different operating systems native library 305 may be implemented as a single library or as multiple libraries, as applicable to the case. In the illustrated embodiment, the native library 305 wraps the kernel while a user application 306 cannot access the kernel directly. However, this does not limit the invention, and it is appreciated that in certain operating systems direct access of user applications to the kernel is allowed. Hereinafter, access of a user application to a kernel's service, whether direct access or via the native library, constitute a "native service".

It is noted that storage device 301 is a resource managed by the kernel 304, while the policies manager302, which is an application, accesses the storage device via native library 305, or via direct kernel access wherein available. However, in order to simplify the illustration, the coupling amongst the policies manager302 and the storage device 301 appears in the figure as if it is direct, without kernel involvement.

Those versed in the art of computer programming will appreciate that the set of native services provided by a kernel 304 and by a native library 305 in a certain operating system is known. In addition, such a versed person will appreciate that every call to a kernel service and hence also to a native library service have a target resource that the service relates thereto. For example, a call requesting to open a file is a native service request whose target resource is the file, or more accurately, the file's address in a storage device. A request for a native service with a respective target resource hereinafter constitutes a "native operation".

According to certain embodiments of the invention, a policy-rule may relate to a native operation, being indicative to the operation, or operations, that should be imposed and performed instead, therefore constituting "imposable operations". The native operations may be a native service provided by the kernel or by the native library, with or without identification of their target resource, with or without identification of operating applications. For example, a rule such as "file-open certain-file.pdf; file-open other-file.pdf may be interpreted as "whenever a native operation tries to open a certain-file.pdf, the other-file.pdf should be opened instead". That is "file-open certain-file.pdf" is the native operation whose target resource is "certain-file.pdf", while "file-open other-file.pdf" is an imposable operation wherein the "other-file.pdf" is the respective target resource. Another non-limiting example is the rule "file-open certain-file.pdf certain-reader.exe; file-open another-file.pdf another-reader.exe", in accordance therewith, whenever the native operation "file-open certain-file.pdf certain-reader.exe" is about to be performed (that is, whenever "certain-file.pdf" is about to be opened in a "certain-reader.exe"), the file "another-file.pdf" should be opened instead, using "another-reader.exe".

It is noted that in the rules examples brought above as well as hereinafter the language used is meant to be clear in order to clarify the embodiments under discussion. Hence, it is non-mandatory that a service named "file-open" is amongst the services available in the kernel or in the library, "file-open" may be indicative to an existing service name, for example by being an enumeration or an index etc. associated with an existing service call or even with a plurality of service calls. Moreover, the examples do not intend to limit the syntax used in rules and any alternative or additional syntax may be applicable.

In the first of the two rule examples "file-open" and "certain-file.pdf" constitute a rule information item indicative of a native operation whose performance should be controlled, and so do "file-open", "certain-file.pdf" and "certain-reader.exe" in the second rule example. Similarly, in the first of the two examples "file-open" and "another-file.pdf" constitute a rule information item indicative of an imposable operation whose performance should be enforced, and so do "file-open", "another-file.pdf" and "another-reader.exe"in the second rule example.

It is noted that in the last two rule examples the imposable service is similar to the native service while the native target resource is changed by the rule, thus enforcing opening a different file instead of the native file that should have been opened. Likewise, in the second example the rule dictates having an operating application in the native operation that is different than the operating application in the imposable operation. That is, in the tworule examples provided above the service stays unchanged ("file-open") while the parameters change. This is non-mandatory though and any combination is available, including a rule enforcing a change in the service. Moreover, the parameters brought therewith (the file name and the identification of the application) are non-limiting as well, and other parameters may be used when applicable, such as information relating to results that should arise upon operating the native service. Still further, it should be considered that instead or in addition to enforcing changes in the service and/or in the parameters, a rule may enforce performance of other functionalities. For example, a certain rule, controlling access to some very sensitive data of the organization, may enforce, e.g., an authorization procedure (the device would hence access a certain authorization entity in the organization and ask for access permission). Another example is logging while further to understanding this the reader would appreciate that there are countless other operations that can be performed in addition to simply changing the operation of the parameters thereof.

According to certain embodiments, the native operations monitored and controlled in accordance with policy-rules are operations that require access to data. The data may be data residing on a remote data-storing computer, it can be data acquired via communication with another mobile device, or it can be data created on the local computing device. For example, an application may request a listing of contact records stored in the device or it may require access to a photo, or a video clip taken by the device's camera.

It was previously explained, with reference to Figures 1 and 2, that part of the data stored on the device may belong, or may be associated with an organization. For example, there may be contact records stored on the device. Those versed in the art would appreciate that the source of the different contact records may vary. According to the example, several of the records were possibly downloaded from an Exchange™ server belonging to the organization. Others may have been downloaded from a publicly available service such as Google™ gmail™, while yet other records may have been created locally by a user operating a local contacts' application (such as telephone-book and others).In the example, those records downloaded from the organization's Exchange™ server may be considered as if they (or more accurately, the data stored wherewith) belong to the organization, and hence the organization may wish to control access thereto from the device.

Therefore, it may be desired to prevent those organization's records from being listed in a list of contact records accessible to applications operating on the device. Hence, a respective rule may be "list-contacts hide-contacts(Exchange)". That is, upon detecting a call to a native service request "list-contacts", contacts whose source is Exchange should be "hidden". Normally, when an application operates the service "list-contacts", a data record is created where the contact records should be listed (as known to those versed in the art, the application may be requested to handle an address to such a record to the library) while data indicative of the contact records is appended to the list-record. The data may be the contact record's addresses in memory or in he storage device or copies of the data stored therein. In accordance with hide-contacts(exchange) those contact records whose source is "exchange" would not be listed in the list-record and therefore the application would not see them in the contacts' listing.

There are two methods for enabling a replacement of native operations with imposable functions.

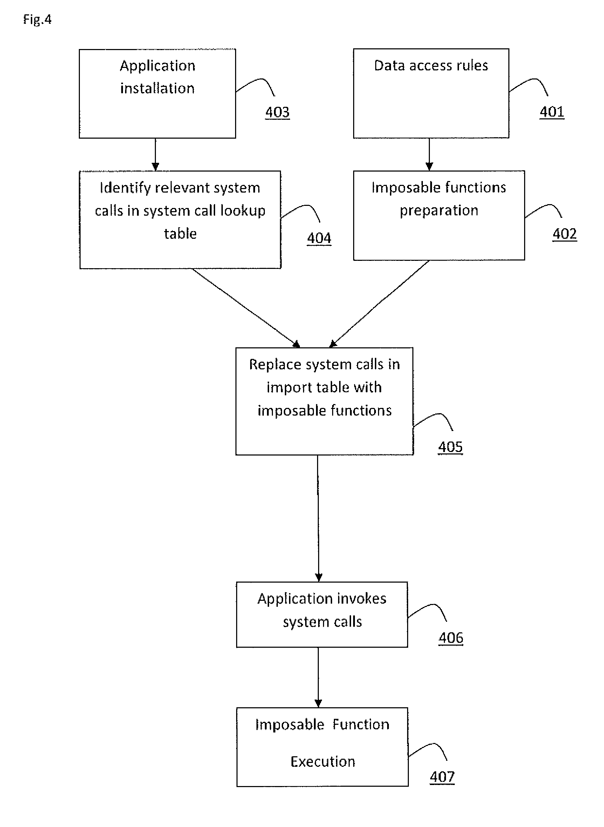

The first method is described in figure 4. The method is about replacing the jump to s Native Function (system call) with a jump to an imposable function.

The figure describes one option of achieving this operation; there are other options as well.

In step 401 the data access rules are being read. They refer to what operations on data items need to be replaced with other operations.

A set of imposable functionswill be prepared in step 402.

In mobile computing devices, a system call lookup table (also known as Import Address Table) is used when the application is calling a function in a different module. In this table there are the functions (or system call) names and their in-memory addresses.

In step 403 an application will be installed and it's lookup table prepared.

In step 404 the lookup table will be examined, and relevant entries will be identified.

In step 405 they will be replaces by the addresses of the appropriate imposable Functions.

In step 406 the application will start executing and it will desire to execute a certain native operation/system call, but the relevant address in the table has been changed and as a result in step 407 the replacement imposable function will be executed.

An example of such address change can be:
Before:
   >> LOOKUP TABLE ENTRY
   >>>> NAME OF FUNCTION FN1
   >>>> NAME OF ORIGIN LIBRARY LIB1
   >>>> ADDRESS OF FUNCTION 0xAAAA
After:
   >> LOOKUP TABLE ENTRY
   >>>> NAME OF FUNCTION FN1
   >>>> NAME OF ORIGIN LIBRARY LIB1
   >>>> ADDRESS OF FUNCTION 0xBBBB - is address of FN1'

The operations described in the figure are one example to the operation of the proxy 303, previously described with reference to Figure 3. It is known *per se* that function overloading can be done either statically, i.e., during compilation, or dynamically, at run time.

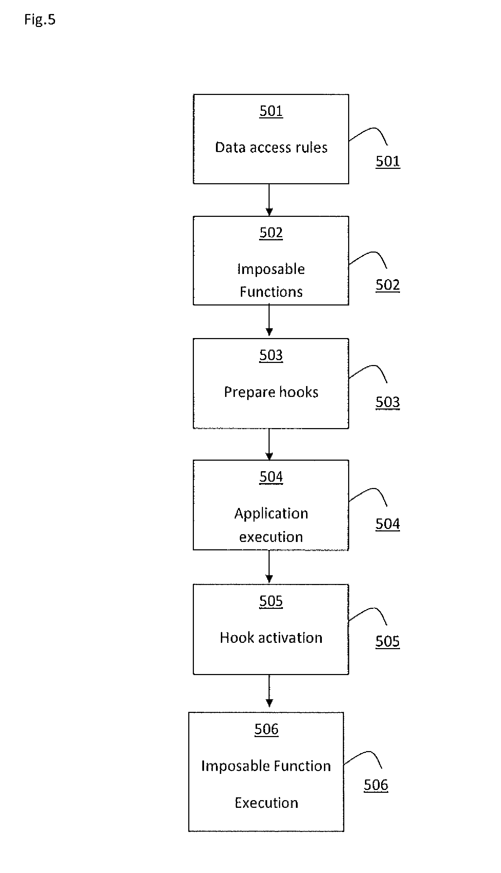

Figure 5describesan alternative method. Certain operating systems include hooks for their system calls, which can be used to call an alternative function. If such hooks are not supported by the operating system than they can be prepared.

In step 501 the data access rules are being read and in step 502 the relevant imposable functions will be prepared.

In step 503 hooks will be prepared if required, or hook usage rules if the hooks exist.

The application will be launched in step 504

A hook based on a system call by the application will be activated in step 505

The imposable function will take place in step 506.

Depending on the rule and the type of data accessed there maybe several types of operations in the imposable function.

One type is data manipulation, where the original data will be modified but it's structure retained.

There are types of datathat do not allow modifications, in this case a copy of the data will be prepared, manipulations done on it and it will be returned to the application.

Another type of operation is just a replacement of the data with another type of data.

For example, if the list of contacts includes contact information belonging to a technician in the organization, there may exist a rule that forbids access to information belonging to technicians (the native operation) while the rule requires returning contact details of the organization's helpdesk instead (this will be the imposable function). In this case, a record with the helpdesk's information will be artificially generated, or it may be retrieved from the rule item or from the computing devices' storage device etc. Regardless of the way in which the artificial data is generated or retrieved, the artificial data may be inserted, or implanted into the list (after, prior to or simultaneously with removing the technicians' information therefrom), while an application obtaining the list would have no knowledge of the manipulation performed. Understanding this, the reader may appreciate that it is possible to artificially generate (or retrieve) the complete data returned in the list, instead of generating only part thereof.

Many access restriction systems exiting today, while trying to access data without proper authorization, a function trying to access would fail, i.e., it will be unable to access the data. Unlike these systems, a function or an application operating in accordance with certain embodiments of the present invention, would not fail. It will return a record of a similar structure and format as the expected accessed record, however, the content would be manipulated (this will be the imposable function).

For example, an application tries to access the camera installed on the computing device in order to take a photo and obtain an image file thereof. However, a rule may restrict this access. While in an access restriction system the application would fail, in a system operating in accordance with the invention the camera may take the photo, and probably even store the image in the devices' storage device. However, instead of handing the stored image or a copy thereof to the application, in the example operating in accordance with embodiments of the invention an entirely white image can be returned. Similarly, when trying to obtain a video file from the device's camera, from the device's storage device or possibly even from a remote source such as a web server, embodiments of the invention may return a video file indeed, yet, its content may be, e.g., white noise. Similarly, remembering the contacts listing example, it is a list in which Exchange-sourced contacts are hidden that is returned. Generally, it may then be stated that according to certain embodiments of the invention, an application trying to access data wherein this access is forbidden by one or more rules, would obtain manipulated data instead.

It should be appreciated that by certain embodiments the manipulated result can be predetermined. For example, one embodiment may always return a white image in response to taking a photo, while another embodiment may always return an image of the organization's logo. In such embodiments it is enough to declare, in a rule, that an application cannot access image files or certain image files. Alternatively, it is possible to determine the image retuned within a rule. Hence, such a rule can declare, for example, that a certain application trying to read an image file should obtain a white image, white another application should obtain the logo image.

In certain cases in which the manipulated data is predetermined, the manipulated data may be pre-prepared, e.g., stored in the computing device's storage device. In other cases the manipulated data may be created at run time.

The examples brought so far are all concerned with reading data from the device. However, this is not a limitation of the invention and according to certain embodiments it is possible to control operations trying to write data. For example, a rule may determine that it is forbidden to write contact records to the organization's Exchange^{™}server. Hence, upon trying to perform such a writing operation the application may get a success indication although no data has been written. It is appreciated that in this case the data that should have been written may be lost. Alternatively, such contact records may be written, e.g., to a local temporary storage instead of writing them into Exchange^{™}, hence protecting the data from getting lost and yet preventing it from reaching the organization's Exchange^{™} server. In yet other cases the data can be modified prior to writing it. For example, a rule may define that whenever an application tries to store a contact record in Exchange, email addresses appearing in the contact should be deleted. Hence, it is generally said that an overloaded imposing function obtaining data from an application for writing, may manipulate the data (ignoring the write operation as well as writing to a different location are considered as manipulations).

Understanding this, it should be appreciated then, that at least in some cases the overloaded imposing function should be familiar with the data structure and/or with the content of the data about to be manipulated.

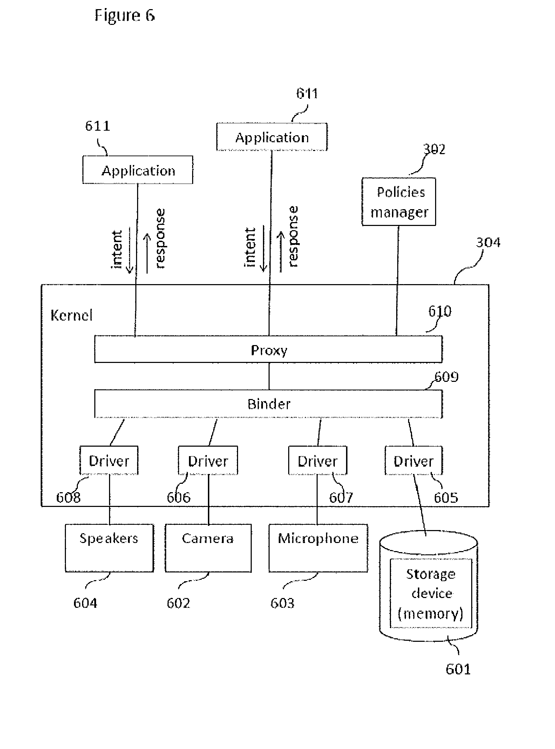

Further to understanding how the invention can be carried out, in accordance with the embodiments described so far, attention is drawn now to Figure 6 that schematically illustrates a system for enforcing rules in a mobile computing device, in accordance with alternative embodiments of the invention. Those versed in the art of computer science would appreciate that a kernel 304 of a computing device, and hence also of a mobile computing device has access to physical memory and any available storage device 601 as well as to other attached devices being part of the mobile device (such as a camera 602, a microphone 603, speakers 604 and others). The kernel normally communicates with attached devices via a computer bus or via communications subsystems to which the attached devices connect. Hence, device drivers shortly referred to as "drivers", simplify programming by acting as translators between the attached devices and the kernel. Indeed, in the figure 605, 606, 607 and 608 are the device driver respective of the storage device 601, camera 602, microphone 603 and speakers 604.

In certain operating system there is a component 609 that provides interprocess communication (IPC) services. For example, in IOS^{™} it is named "binder", in Windows 8^{™} "filter" and in Android ^{™} it is "binder" as well. Hereinafter, component 609 is generally referred to as "binder" although it should be considered that the invention is non-limited to Android ^{™} and according to embodiments of the invention any equivalent service may apply, including a dedicated service that may be developed especially as part of a certain embodiment while not being included in the operating system.

The binder 609 is mainly aimed at allowing IPC between userspace components, such as applications. However, it is also in charge of providing communication between userspace components and kernel services such as device drivers. In the latter case the binder may provide an interface for those device drivers bound thereto.

According to embodiments of the invention, a proxy 610 may be bound to binder 609, wherein the proxy overloads the binder. Hence, upon calling the binder, in practice an application calls the proxy. The proxy, then, having access to the policies manager 302 (see Figure 3), may operate in accordance with the flowchart presented in Figure 4, in turn calling binder 609 for operating device driver as required. It is noted though that instead of calling the binder 609 for operating device drivers, in accordance with alternative embodiments the proxy may call the device drivers directly, if appropriate to the case.

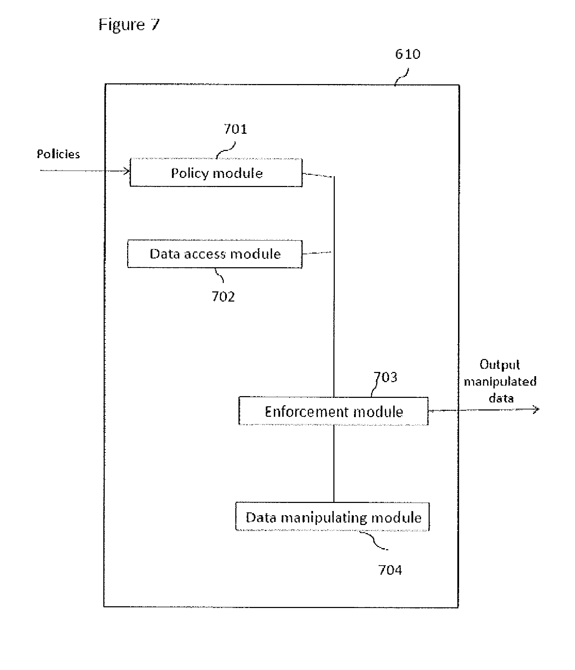

Figure 7 is a block diagram depicting a proxy610 in accordance with certain embodiments of the invention. It is noted that the block diagram may be suitable also to proxy 303 of Figure 3. The proxy comprises a policy module 701 for obtaining rule information items, each item being indicative of a native operation whose performance should be controlled and of an imposable operation that should be enforced. According to certain embodiment the policy module 701 may be configured also for parsing information carried by the rule information items, while it can be appreciated that the rule information items may include rule information in any format suitable to the case, including (but not limited by) XML.

A data access module 702 is configured to access data records, while it can be appreciated that the module is aware of the data records it is configured to handle. That is, if the module should access an image file obtained from a camera, the module should know how to access the file. If the module is configured to access contact records, the module should know how to access the records (e.g., in a file, in a relational database, etc.) and how to read and/or write the data stored in the records (hence it should be familiar with the fields included therein). It is noted though that the data access module 702 is configured to access stored data in order to fill it into a data record. To this end, the module may perform a single read operation or a plurality of read operations, as required for the case. Similarly, when the module is requested to write data to the storage device it may perform a single write operation or multiple write operations.

An enforcement module 703 is configured for enforcing rules. The enforcement module 703 is coupled to the policy module 701 in order to allow receipt of information indicative of rules therefrom. It is also coupled to the data access module 702, whose operation is required (at least in many cases) while enforcing a rule. For example, in those cases when the enforcement module 703 is requested to enforce an imposable operation whose returned value is based on the original value of the native operation, the enforcement module 703 may instruct the data access module 702 to access the original data. Reference is made, e.g., to 502 of Figure 5, wherein original data is accessed while it should be understood that according to certain embodiments the enforcement module 703 passes to the data access module an indication of the native operation's identity together with other parameters required for accessing the data (such as file names, and/or key values for querying the database, etc.), while the data access module is configured for performing the operation. In certain cases the data access module 702 may be requested, e.g., to retrieve pre-prepared data from a storage device.

Further to obtaining the datafrom the data access module 702, the enforcement module 703 may instruct a data manipulating module704 coupled thereto to manipulate the data so as to obtain manipulated data. The manipulated data should have a structure resembling the structure of the data record that the native operation is expected to return, yet the data stored in the record is manipulated in accordance with the imposable operation. In certain embodiments the enforcement module may instruct the manipulating module how to manipulate the data, step by step (in the technicians example previously provided, the enforcement module may instruct the data manipulating module to change the record of the first technician, then the record of the second technician and so on, until all the technicians' records are handled). Alternatively, it may provide the data manipulating module at once with a list including all records, amongst are, e.g., three records of technicians, with instructions how to manipulate them all.

Then the enforcement module may provide the manipulated data as output, in replacement of the expected data, while it can be appreciated that in certain alternative embodiments it may be the data-manipulating module 704 that provides the output, instead of the enforcement module 703.

It will be understood that the system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

The invention described above is meant to allow company control on its employee's mobile computing devices, but it is useful for mobile computing devices in general.

In these devices the applications are simple and heavily rely on the OS - therefore it is very common that an application crashes when it gets into a situation where data it did not expect is processed by the application.

For example, if a camera did not operate, an application, which is trying to read the image, will crash. The above invention can be used in a way that the data will always be examined, and if bad data occurs it will be replaced by known data - for example, in the picture case a blank picture can be introduced.

It should be noted that although the invention is focused on data protection, the same method would allow replacing any computing device operation by other operations.

## Claims

1. A method for controlling operations performed by a mobile computing device, the method comprising:
Obtaining rule information items indicative of a native operation whose performance should be controlled and preparing of imposable operations that should be enforced based on it and replacing a native operation with an imposable operation

2. A method as in claim 1 where the native operation is data access and the imposable operation is providing different data instead of the original data.

3. A method as in claim 2 where the difference in the data is achieved by replacing the data with data suitable for the rules.

4. A method as in claim 2 where the difference in the data ,is achieved by manipulating the original data

5. A method as in claim 2 where the difference in the data is achieved by copying the original data and manipulating it.

6. A method as in claim 5 where a jump to a native operation initiated by the application is replaced with a jump to an imposable function

7. A method as in claim 6 where a native operation in an application lookup table is being replaced with an imposable function. A method as in claim 1 where a hook is causing a call by the application to a native operation to be converted to an imposable function. :

8. The method of claim 2 wherein obtaining rule information items includes parsing information carried by said rule information items.

9. An apparatus for controlling operations performed by a mobile computing device, the apparatus comprising:
a policy module for obtaining rule information items indicative of a native operation whose performance should be controlled and of an imposable operation that should be enforced;
a data access module configured to access data records;
an enforcement module for enforcing the imposable operation indicated by the rule information; and a data-manipulating module for manipulating data in accordance with said imposable operation so as to obtain manipulated data having structure resembling said data records.
